**Europäisches Patentamt**

**European Patent Office**

**Office européen des brevets**

(19)

(11) Veröffentlichungsnummer: **0 380 511 B1**

## (12) EUROPÄISCHE PATENTSCHRIFT

(45) Veröffentlichungstag der Patentschrift:
08.01.92 Patentblatt 92/02

(51) Int. Cl.⁵: **B60T 8/60**

(21) Anmeldenummer: 88907626.1

(22) Anmeldetag: 23.09.88

(86) Internationale Anmeldenummer:
PCT/DE88/00587

(87) Internationale Veröffentlichungsnummer:
WO 89/02844 06.04.89 Gazette 89/08

(54) **ELEKTRONISCHES ANTIBLOCKIERSYSTEM.**

(30) Priorität: 25.09.87 DE 3732348

(43) Veröffentlichungstag der Anmeldung:
08.08.90 Patentblatt 90/32

(45) Bekanntmachung des Hinweises auf die
Patenterteilung:
08.01.92 Patentblatt 92/02

(84) Benannte Vertragsstaaten:
DE FR GB IT SE

(56) Entgegenhaltungen:
US-A- 4 648 663

(56) Entgegenhaltungen:
US-A- 4 664 453
Derwent's Abstract no. 86-337780/51,
SU1227967 (N-W CORRESPONDENCE POLY)
30 April 1986

(73) Patentinhaber: **Messerschmitt-Bölkow-Blohm
Gesellschaft mit beschränkter Haftung
Robert-Koch-Strasse
W-8012 Ottobrunn (DE)**

(72) Erfinder: **KÄLBERER, Gerhard
An der Weilach 14
W-8898 Schrobenhausen (DE)**
Erfinder: **SPIES, Hans
Schiesstätte 12
W-8068 Pfaffenhofen (DE)**

## Beschreibung

Die Erfindung bezieht sich auf ein elektronisches Antiblockiersystem gemäß dem Gattungsbegriff des Anspruchs 1.

Die Antiblockiersysteme gemäß dem Stand der Technik benützen als Sensoren Drehzahlgeber, die jeweils an der Vorderachse oder an jedem Rad angeordnet sind und über die Drehzahl der Räder und die auf das Bremspedal ausgeübte Kraft eine Regelgröße ableiten, die die jeweilige Kraft am Bremszylinder derart steuert, daß ein Blockieren der Räder, insbesondere im hohen Geschwindigkeitsbereich vermieden wird. Hierbei hängt die erreichte Verzögerung wesentlich von dem gebremsten Rad ab, das den kleinsten Kraftschlußbeiwert aufweist. Die während des Bremsvorganges sich ergebende Lenkfähigkeit hängt unter anderem mit dem Reifenkennlinienfeld direkt zusammen.

Durch den Artikel "Der Einfluß der Reifenkennlinie auf Signalgewinnung und Regelverhalten von Fahrzeugen mit Anti-Blockier-Systemen" der Zeitschrift "Automobil-Industrie", Heft 3/ 87, Seiten 231 - 237, ist bekannt, daß die Reifenkennlinie wesentlich die Auslegung eines Fahrzeugs beeinflußt und daß die bisherigen mechanischen Antiblockiersysteme sehr empfindlich auf Veränderungen der Reifeneigenschaften reagieren, wogegen elektronische Antiblockiersysteme beträchtliche Änderungen der Reifeneingenschaften bewältigen könnten.

Der vorliegenden Erfindung liegt die Aufgabe zugrunde, ein elektronisches Antiblockiersystem der eingangs genannten Art zu schaffen, das in seiner Leistungsfähigkeit dadurch optimiert wird, daß einmal die Reifenkennlinien gemessen und genutzt werden und zum andernmal alle Daten von früheren und aktuellen Bremsvorgängen abrufbar gespeichert werden.

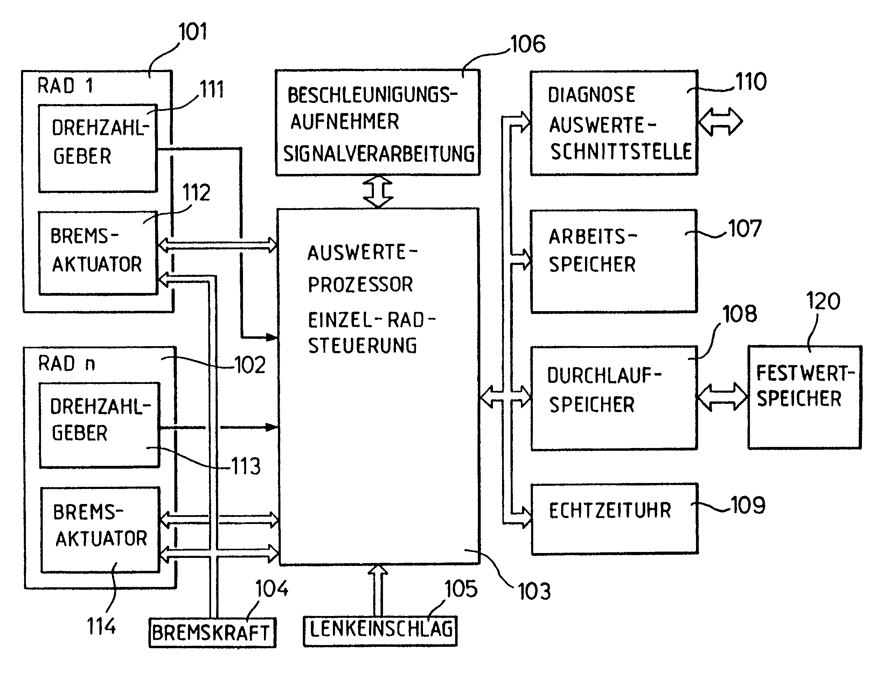

Diese Aufgabe wird durch die im Anspruch 1 aufgezeigten Maßnahmen gelöst. In den Unteransprüchen sind Weiterbildungen und Ausgestaltungen angegeben und in der nachfolgenden Beschreibung ist ein Ausführungsbeispiel beschrieben und in der Figur der Zeichnung schematisch in einem Blockschaltbild dargestellt.

Wie in der Figur der Zeichnung veranschaulicht, ist an jedem Rad 1 - n eine Einrichtung 101, 102,...angeordnet, die sich im wesentlichen aus einem Drehzahlgeber 111, 113,.. und einem Bremsaktuator 112, 114,.. zusammensetzt. Die Drehzahlgeber 111, 113,.. geben ihre Signale an einen Auswerteprozessor 103 mit integrierter Einrichtung zur Einzelradsteuerung ab. Dieser Auswerteprozessor 103 steuert im Bremsfall die Bremsaktuatoren 112, 114,.. entsprechend der am Aktuator und am Auswertprozessor vorhandenen Bremskraft 104 nach. Insoweit stimmt die vorbeschriebene Einrichtung mit denjenigen des Standes der Technik überein. Um nun die gestellten Aufgaben lösen zu können, werden dem Auswerteprozessor 103 nun noch weitere Informationen durch nachfolgende Einrichtungen etc. zugeführt:

Durch einen Sensor der Lenkradeinschlag 105, durch einen Beschleunigungsaufnehmer mit Signalverarbeitung 106 die Längs-, Quer- und Drehbeschleunigung und durch eine Echtzeituhr 109 das Datum und die Uhrzeit. Weiterhin erhält der Auswertespeicher 103 mit seiner Einzelrad-Steuerung aus einem mit ihm verbundenen Arbeitsspeicher 107 sogenannte "Erfahrungsdaten des Bremssystems", die aus vergangenen Bremsverläufen gewonnen worden sind. Außerdem ist der Auswerteprozessor 103 mit einem Durchlaufspeicher 108 verbunden, der die aktuellen Daten in einem Festwertspeicher 120 ablegt, so daß diese Daten, die beispielsweise bei einem Aufprall, über den aktuellen Beschleunigungsverlauf aus dem Beschleunigungsaufnehmer 106 oder bei einem ungewöhnlichen Bremsverlauf aus dem Auswertprozessor 103 gemeldet werden, nach dem Unfall zur Verfügung stehen bzw. über den Chip des Festwertspeichers 120 abrufbar sind.

Darüberhinaus ist der Auswertprozessor 103 mit einer Diagnose- und Auswertschnittstelle 110 verknüpft, über die folgende Daten ausgelesen werden können:

– die korrekte Funktion des Antiblockiersystems

– die aufgetretenen Fehler

– die aus dem Fahrverhalten abgeleiteten Kennlinien der Reifen

– die über den Zeitpunkt und den Verlauf von kritischen Fahrmanövern angefallen sind

– oder alle die Daten, die vor und nach einem eingetretenen Aufprall angefallen sind.

Durch Beschleunigungsmessungen bei ganz normalen Bremsvorgängen kann jeweils das Kennlinienfeld aller 4 oder mehr Reifen gemessen, dem Arbeitsspeicher 108 eingegeben und für den Notbremsfall aus diesem Arbeitsspeicher zur Verfügung gestellt werden. Weiterhin ist die Möglichkeit geschaffen worden, daß je nach Komplexität der Einheit "Beschleunigungsaufnehmer mit Signalverarbeitung" 106 während des Bremsvorganges im Zusammenhang mit dem Lenkradeinschlag (aus 105) ein optimales Abbremsen bei gefährlichen Situationen zu erzielen.

Die Echtzeituhr 109 gibt Auskunft über die in letzter Zeit integrierten Bremsvorgänge und damit auch ein Maß für beispielsweise Bremsscheibenerwärmung oder Reifenerwärmung bei langen Fahrten und weiterhin die Möglichkeit, jahreszeitlich bedingte Reibbeiwerte der Fahrbahn zu berücksichtigen.

Da alle vorgenannten Werte in dem Durchlaufspeicher 108 ständig gespeichert werden, stehen sie zum

EP 0 380 511 B1

Nachweis von z.B. korrekt eingeleiteten Bremsmanövern jederzeit über die Diagnose-Bremsschnittstelle 110 zur Verfügung. Bei einem Aufprall werden diese Daten darüberhinaus in dem Festwertspeicher 120 so gespeichert, daß sie auch bei Ausfall des Farhzeugnetzes oder bei Zerstörung der Zuleitungen über die Diagnose-Schnittstelle 110 oder - wie bereits erwähnt - über den Festwertspeicher-Chip abrufbar sind.

Damit ist ein elektronisches Antiblockiersystem mit einem oder mehreren Beschleunigungssensoren geschaffen, bei dem durch Korrelation der Beschleunigungssignale und Bremsdaten adaptiv die Reifenkennlinien gemessen und genutzt werden, wobei außerdem noch alle Daten der Bremsvorgänge in einem Umlaufspeicher gespeichert werden.

**Patentansprüche**

1. Elektronisches Antiblockiersystem mit einem Drehzahlgeber und einem gesteuerten Bremsaktuator pro Rad, sowie einem Auswerteprozessor, **dadurch gekennzeichnet,** daß durch Integrierung mindestens eines Beschleunigungsaufnehmers (106), mit dessen Daten bei normalen Bremsvorgängen die Reifen-Kennlinien gemessen und für nächste Bremsvorgänge dem Auswerteprozessor (103) eingegeben werden und dort zur Verfügung stehen, ein adaptives Anti-Blockiersystem geschaffen ist, wobei dem Auswertprozessor (103) zusätzlich ein Arbeitsspeicher (107) mit Erfahrungsdaten früherer Bremsvorgänge und ein Durchlaufspeicher (108) sowie eine Diagnose-Auswert-Schnittstelle (110) zugeordnet sind.

2. Antiblockiersystem nach Anspruch 1, **dadurch gekennzeichnet,** daß dem Auswertprozessor (103) eine Einrichtung zur Signalübertragung des Lenkradeinschlages (105) zugeordnet ist.

3. Antiblockiersystem nach den Ansprüchen 1 oder 2, **dadurch gekennzeichnet,** daß dem Auswertprozessor (103) eine Echtzeituhr (109), die alle integrierten Bremsvorgänge zeitlith kennzeichnet, zugeordnet ist.

4. Antiblockiersystem nach den Ansprüchen 1 bis 3, **dadurch gekennzeichnet,** daß dem Durchlaufspeicher (108) ein Festwertspeicher (120) zugeordnet ist der z.B. beim Aufprall die Daten zur dauerhaften Sicherung übernimmt..

5. Antiblockiersystem nach den Ansprüchen 1 bis 4, **dadurch gekennzeichnet,** daß dem Auswertprozessor (103) eine Diagnose- und Auswertschnittstelle (110) zugeordnet ist.

**Claims**

1. Electronic anti-blocking system comprising a revolution counter and one controlled brake actuator per wheel, and with an evaluation processor, characterised in that an adaptive anti-blocking system is created, by way of integration of at least one acceleration recorder (106), the data of which measures the tyre-marking lines during normal braking processes and feeds them to the evaluation processor (103) for subsequent braking processes and to keep them available thereat, whereby the evaluation processor (103) is additionally associated with a work store (107) with empirical data of previous braking processes, and with a transit store (108) and a diagnostic evaluation interface (110).

2. Anti-blocking system according to claim 1, characterised in that the evaluation processor (103) is associated with a device for the transfer of signals of the steering-wheel angle (105).

3. Anti-blocking system according to claims 1 or 2, characterised in that the evaluation processor (103) is associated with a real-time clock (109), which time-characterises all integrated braking processes.

4. Anti-blocking system according to claims 1 to 3, characterised in that the transit store (108) is associated with a permanent-value store (120), which takes over the data for permanent saving, for example during an impact.

5. Anti-blocking system according to claims 1 to 4, characterised in that the evaluation processor (103) is associated with a diagnose- and evaluation interface (110).

**Revendications**

1. Système d'antiblocage électronique comportant un capteur de vitesse de rotation et un actionneur de frein commandé sur chaque roue, ainsi qu'un processeur d'analyse caractérisé en ce que, par intégration d'au moins un capteur d'accélération (106), à partir des données duquel les caractéristiques des pneumatiques sont mesurées lors de processus de freinage normaux, introduites dans le processeur d'analyse (103) en vue de processus de freinage ultérieurs et maintenues à disposition, on crée un système d'anti-blocage auto-adaptatif, une mémoire de travail (107) supplémentaire contenant des données d'expérience provenant de processus

3

de freinage antérieurs, une registre à retard (108) ainsi qu'un interface de diagnostic et d'analyse (110) étant associés au processeur d'analyse (103).

2. Système d'antiblocage électronique selon la revendication 1 caractérisé en ce qu'un dispositif de transmission de signal d'angle de rotation du volant (105) est associé au processeur d'analyse (103)

3. Système d'antiblocage électronique selon la revendication 1 ou 2 caractérisé en ce qu'une horloge en temps réel (109), qui caractérise dans le temps tous les processus de freinage intégrés, est associée au processeur d'analyse (103).

4. Système d'antiblocage électronique selon les revendications 1 à 3 caractérisé en ce qu'une mémoire morte (120), qui conserve de manière permanente les données en cas de collision par exemple, est associée à la registre à retard (108).

5. Système d'antiblocage électronique selon les revendications 1 à 4 caractérisé en ce qu'un interface de diagnostic et d'analyse (110) est associé au processeur d'analyse (103).

EP 0 380 511 B1

101

RAD 1

DREHZAHL-GEBER — 111

BREMS-AKTUATOR — 112

102

RAD n

DREHZAHL-GEBER — 113

BREMS-AKTUATOR — 114

106

BESCHLEUNIGUNGS-AUFNEHMER SIGNALVERARBEITUNG

AUSWERTE-PROZESSOR EINZEL-RAD-STEUERUNG — 103

DIAGNOSE AUSWERTE-SCHNITTSTELLE — 110

ARBEITS-SPEICHER — 107

DURCHLAUF-SPEICHER — 108

FESTWERT-SPEICHER — 120

ECHTZEITUHR — 109

BREMSKRAFT — 104

LENKEINSCHLAG — 105